# EUROPEAN PATENT APPLICATION

(11) **EP 2 361 670 A1**
(43) Date of publication of application: **31.08.2011**
(21) Application number: 11250094.7
(22) Date of filing: 27.01.2011
(51) Int. Cl.: B01D 63/02, B01D 61/36

(54) **Membrane distillation system and method**

(30) Priority: 27.01.2010 US 694757
(71) Applicant: Milton Roy Company, Ivyland, PA 18974 (US)
(72) Inventor: Ma, Zidu, Elington, CT 06029 (US); Irish, James R., Middlefield, CT 06455 (US); Davis, Timothy D., Southington, CT 06489 (US); Winch, Gary D., Colchester, CT 06415 (US)
(74) Representative: Tomlinson, Kerry John

(57) **Abstract**

A membrane distillation system includes a distillation vessel (16), an array of hollow fiber membranes (34) pervious to distillate vapor but impervious to feed solution and an array of hollow tubes (32) impervious to distillate vapor and feed solution but which allow thermal energy transmission. The system further includes a pump, a heat exchanger for heating the feed solution before it enters the hollow fiber membranes, and an outlet (27) for removing distillate from the distillation vessel. A method for removing distillate from a feed solution includes delivering the feed solution through hollow tubes spanning a distillation vessel, heating the feed solution, delivering the feed solution through hollow fiber membranes spanning the distillation vessel to create a vapor pressure differential between the hollow fiber membranes and a distillation volume within the distillation vessel, and removing distillate from the distillation vessel.

## Description

### BACKGROUND

Various water treatment technologies exist. Membrane distillation is one type of water treatment technology that removes a distillate from a feed solution. Membrane distillation can be used in the treatment of wastewater and salty or brine solutions. During membrane distillation, a feed solution is typically preheated to generate a temperature differential across a membrane. This temperature differential creates a vapor pressure differential between a feed side and a distillate side of the membrane, which causes a portion of the feed solution to evaporate near the pore entrance on the feed side and the vapor to transmit through the membrane. The transmitted vapor then condenses at a gas/liquid interface near the pore entrance of the membrane on the distillate side, thereby providing the desired distillate. Because the vaporization of a liquid is involved in the separation process, a large amount of thermal energy can be transferred from the feed solution to the distillate.

The thermal efficiencies of membrane distillation units have been a concern as membrane distillation competes with other water treatment technologies. The gained output ratio (GOR) of a membrane distillation system is the ratio of the latent energy of the distillate to the energy spent to produce the distillate. For a membrane distillation system utilizing direct contact membrane distillation (DCMD) having a design configuration of a membrane distillation module and a heat exchanger, the GOR plateaus around 3. Until now, reaching this GOR level required investment in specialized equipment, such as titanium heat exchangers, which increased the overall cost of the membrane distillation system. The present invention provides a membrane distillation system capable of providing a GOR greater than that of prior systems in addition to providing a design that can be scaled up for large scale applications.

### SUMMARY

A membrane distillation system includes a distillation vessel defining a distillation volume with generally opposite first and second portions. The system also includes an array of hollow fiber membranes, which are pervious to distillate vapor but impervious to feed solution, and an array of hollow tubes, which are impervious to distillate vapor and feed solution but allow transmission of thermal energy to heat feed solution flowing through the hollow tubes using thermal energy from feed solution flowing through the hollow fiber membranes. Both arrays extend through the distillation volume and are spaced from each other. The system further includes a pump for delivering a feed solution to the array of hollow tubes, a heat exchanger for heating the feed solution after it exits the hollow tubes and before it enters the hollow fiber membranes and an outlet for removing distillate from the distillation vessel.

A circuitous membrane distillation system includes a feed solution source, a pump for delivering a feed solution to a distillation vessel, a distillation vessel and first and second heat exchangers. The distillation vessel includes vessel walls defining a distillation volume, a first manifold located in a first portion of the distillation vessel for receiving the feed solution, a second manifold located in a second portion of the distillation vessel, and a plurality of hollow tubes extending from the first manifold to the second manifold where the hollow tubes are impervious to distillate vapor and feed solution but allow transmission of thermal energy. The distillation vessel also includes a third manifold located in the second portion of the distillation vessel and spaced from the second manifold for receiving heated feed solution, a fourth manifold located in the first portion of the distillation vessel and spaced from the first manifold, a plurality of hollow fiber membranes extending from the third manifold to the fourth manifold where the hollow fiber membranes are pervious to distillate vapor but impervious to feed solution, allowing distillate vapor to cross the membrane into the distillation volume, and an outlet for removing distillate from the distillation volume. The first heat exchanger heats the feed solution after it exits the second manifold and before it enters the third manifold. The second heat exchanger cools the feed solution after it exits the fourth manifold and before it returns to the feed solution source.

A method for removing distillate from a feed solution includes delivering a feed solution through hollow tubes spanning a distillation vessel to preheat the feed solution, heating the feed solution after it exits the hollow tubes, delivering the feed solution through bores of hollow fiber membranes spanning the distillation vessel to create a vapor pressure differential between the bores of the hollow fiber membranes and a distillation volume within the distillation vessel, and removing distillate from the distillation volume of the distillation vessel. The vapor pressure differential causes vapor from the feed solution to transmit across the hollow fiber membranes and condense as distillate within the distillation vessel. Thermal energy from the feed solution flowing through the bores of the hollow fiber membranes is transferred to the feed solution flowing through the hollow tubes.

### BRIEF DESCRIPTION OF THE DRAWINGS

FIG. 1 is a schematic illustration of a single vessel membrane distillation system.

FIG. 2 is a schematic illustration of a distillation vessel.

FIG. 3 is a cross-sectional view of a hollow fiber membrane array.

FIG. 4 is an expanded sectional view of a hollow fiber membrane which allows vapor transmission.

FIG. 5 is a cross-sectional view of a hollow tube array.

FIG. 6 is an expanded sectional view of a hollow tube which allows thermal transmission.

FIG. 7 is an enlarged cross-sectional view of a distillation vessel with hollow fiber membranes, hollow tubes and heat exchange material.

FIG. 8 is a flow diagram illustrating a method for removing a distillate from a feed solution.

### DETAILED DESCRIPTION

The present invention provides a membrane distillation system and method capable of operating with increased thermal efficiency. High thermal efficiency can be obtained without the use of expensive recuperating heat exchangers. The present invention allows for a single vessel membrane distillation system suitable for water treatment at various scales. This membrane distillation system obviates the need for more expensive cartridge-based membrane modules and reduces the overall complexity of the membrane distillation system.

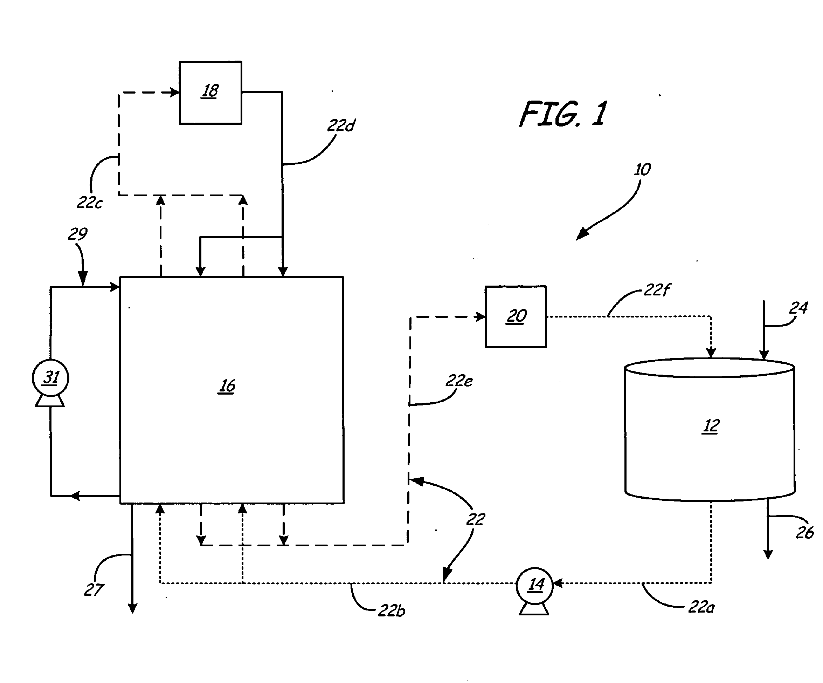

FIG. 1 is a schematic illustration of one embodiment of a membrane distillation system 10, which includes feed source 12, pump 14, membrane distillation vessel 16, heat exchanger 18, heat exchanger 20 and feed conveyance network 22. Feed conveyance network 22 is a series of lines, conduits and tubing 22a-22f connecting the various elements of membrane distillation system 10 as shown in FIG. 1.

Feed source 12 is a tank, vessel, conduit or other container or location for supplying feed solution to membrane distillation system 10. Feed source 12 includes an inlet 24 for introducing new feed solution to feed solution source 12 and an outlet 26 for removing feed solution from feed source 12. Suitable feed solutions for use in membrane distillation system 10 include wastewater, seawater, brines or other aqueous solutions containing salts, other solutes or contaminants.

Pump 14 is connected to feed source 12 by line 22a of feed conveyance network 22. Pump 14 delivers low temperature feed solution from feed source 12 to membrane distillation vessel 16 and the rest of membrane distillation system 10. Pump 14 pressurizes the low temperature feed solution to provide the necessary pressure to circulate the feed solution throughout membrane distillation system 10. From pump 14, the low temperature feed solution travels to membrane distillation vessel 16. Pump 14 is connected to distillation vessel 16 by one or more lines 22b of feed conveyance network 22.

Distillation vessel 16 includes arrays of hollow fiber membranes and arrays of hollow tubes. Distillate, as vapor, crosses the hollow fiber membranes and collects within distillation vessel 16. The hollow tubes are used for heat recuperation (preheating the low temperature feed) to improve efficiency of membrane distillation system 10. The configuration and operation of distillation vessel 16 and the contained arrays of hollow fiber membranes and hollow tubes are described in further detail below. The low temperature feed solution enters distillation vessel 16 and passes through the hollow tubes where it is preheated by distillate flowing through distillation vessel 16. The preheated feed solution exits distillation vessel 16 and is delivered to heat exchanger 18. Distillation vessel 16 is connected to heat exchanger 18 by one or more lines 22c of feed conveyance network 22. Distillation vessel 16 also includes distillate outlet 27 for removing distillate from distillation vessel 16. Optionally, distillate is recirculated through distillation vessel 16 during operation. Recirculation loop 29 includes pump 31 for recirculating distillate through distillation vessel 16. The direction of distillate flow through recirculation loop 29 can vary depending on the distillation application. Recirculation loop 29 can pump distillate from the bottom of distillation vessel 16 to the top of distillation vessel 16, as shown in FIG. 1, or from the top of distillation vessel 16 to the bottom.

Heat exchanger 18 is a heating heat exchanger. In one embodiment, heat exchanger 18 is a solar powered heat exchanger. In other embodiments, heat exchanger 18 utilizes steam or industrial plant waste heat streams. Heat exchanger 18 heats the preheated feed solution to an elevated temperature (producing a high temperature feed solution) before it is delivered to the hollow fiber membranes within distillation vessel 16. The high temperature feed solution is typically heated to a temperature between about 50 °C and about 100°C, with particularly suitable temperatures being between about 70 °C and about 95 °C. These ranges of feed solution temperatures allow vapor pressure differentials to form so that feed solution vapor can pass across membranes and collect as distillate. Once heated, the high temperature feed solution is delivered back to distillation vessel 16. Heat exchanger 18 is connected to distillation vessel 16 by one or more lines 22d of feed conveyance network 22. The high temperature feed solution reenters distillation vessel 16 and passes through the hollow fiber membranes. Heating the preheated feed solution allows the resulting high temperature feed solution to enter distillation vessel 16 and the hollow fiber membranes at an elevated temperature to increase the distillation rate within distillation vessel 16. A portion of the high temperature feed solution is converted to distillate and passes across the hollow fiber membranes, and a portion of the feed solution continues through the hollow fiber membranes as retentate feed solution. The retentate feed solution that continues through the hollow fiber membranes exits distillation vessel 16 and is delivered to heat exchanger 20. Distillation vessel 16 is connected to heat exchanger 20 by one or more lines 22e of feed conveyance network 22.

Heat exchanger 20 is a cooling heat exchanger. Heat exchanger 20 cools the retentate feed solution that exits distillation vessel 16 to a reduced temperature before it is delivered back to feed source 12. The retentate feed solution is typically cooled to a temperature between about 5 °C and about 75 °C, with particularly suitable temperatures being between about 20 °C and about 55 °C. Once cooled, the retentate feed solution is delivered back through line 22f of feed conveyance network 22 to feed source 12, where it can continue through membrane distillation system 10 additional times or be removed from membrane distillation system 10. At this point, the feed solution has been concentrated as some distillate from the feed solution has been removed during distillation. The feed solution can be removed from feed source 12 at outlet 26 or mixed with additional incoming feed solution provided through inlet 24.

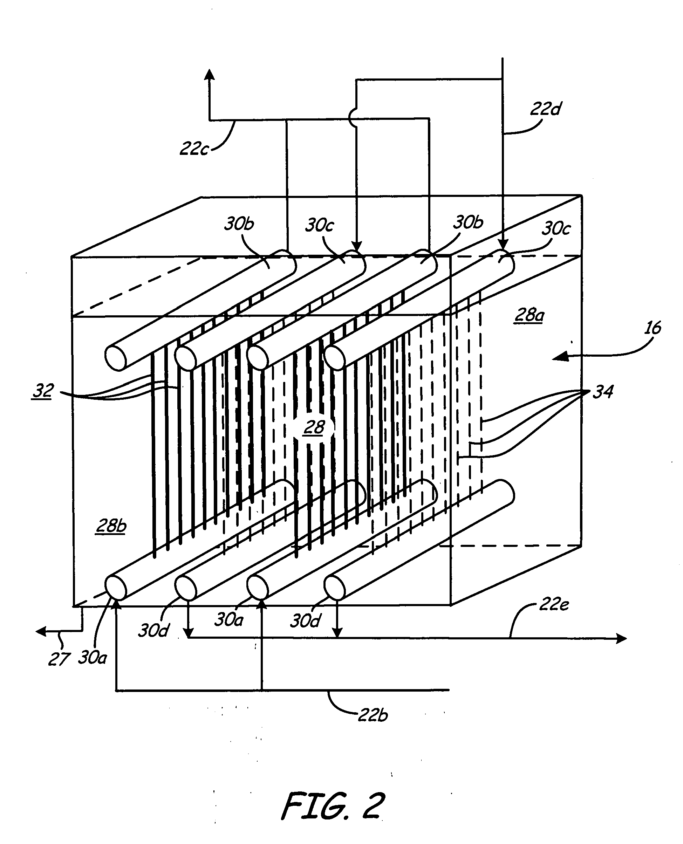

FIG. 2 illustrates a perspective view of one embodiment of distillation vessel 16. Distillation vessel 16 defines a distillation volume 28 and includes manifolds 30, arrays of hollow tubes 32, and arrays of hollow fiber membranes 34. Distillation volume 28 is separable into two portions 28a and 28b on generally opposite "sides" of distillation volume 28. Two separate manifolds 30a, 30b are paired with each array of hollow tubes 32, and two separate manifolds 30c, 30d are paired with each array of hollow fiber membranes 34. One manifold 30a, 30c in each pair is an entry manifold and the other manifold 30b, 30d is an exit manifold. Each array of hollow tubes 32 extends from entry manifold 30a to exit manifold 30b. Each array of hollow fiber membranes 34 extends from entry manifold 30c to exit manifold 30d. One manifold in each pair is generally located in portion 28a, and the other manifold in the pair is generally located in portion 28b. For example, entry manifold 30a is located in portion 28b and exit manifold 30b is located in portion 28a. Entry manifold 30c is located in portion 28a and exit manifold 30d is located in portion 28b. In this configuration, arrays of hollow tubes 32 and arrays of hollow fiber membranes 34 between paired manifolds span at least a major portion of distillation volume 28.

As shown in FIG. 2, manifolds 30 can be arranged in a side-by-side parallel configuration. Arrays of hollow tubes 32 and arrays of hollow fiber membranes 34 alternate. Alternating the arrays of hollow tubes 32 and arrays of hollow fiber membranes 34 allows for heat recuperation within distillation volume 28. The high temperature feed solution from heat exchanger 18 and lines 22d enters distillation vessel 16 through entry manifold 30c and proceeds through bores of hollow fiber membranes 34. Some of the high temperature feed solution crosses hollow fiber membranes 34 as a vapor and enters distillation volume 28. Thermal energy accompanies the vapor as it crosses hollow fiber membranes 34. The remaining retentate feed solution travels towards exit manifold 30d where it is removed from distillation vessel 16. At the same time, the low temperature feed solution from pump 14 and lines 22b enters distillation vessel 16 through entry manifold 30a and proceeds through bores of hollow tubes 32. The low temperature feed solution is unable to cross hollow tubes 32 into distillation volume 28. However, hollow tubes 32 transmit thermal energy from distillation volume 28 to the low temperature feed solution traveling through the bores to preheat the low temperature feed solution. This counter-flow arrangement provides heat recuperation within distillation volume 28 which increases the overall efficiency of membrane distillation system 10.

The low temperature feed solution travelling through hollow tubes 32 is preheated in distillation vessel 16 by the high temperature feed solution travelling through hollow fiber membranes 34 and the vapor crossing hollow fiber membranes 34. This heating of the low temperature feed solution reduces the amount of energy needed to heat the low temperature feed solution at heat exchanger 18. The high temperature feed solution travelling through the bores of hollow fiber membranes 34 is pre-cooled in distillation vessel 16 by the vapor crossing hollow fiber membranes 34 (the vapor taking thermal energy away from the hot feed solution) and the low temperature feed solution travelling through hollow tubes 32. This cooling of the high temperature feed solution reduces the amount of energy needed to cool the high temperature feed solution at heat exchanger 20.

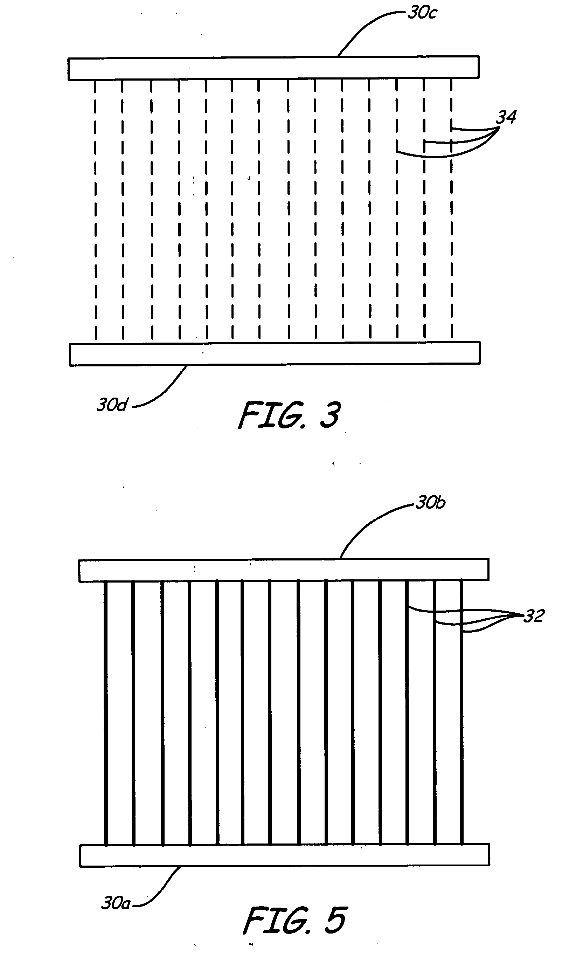

FIG. 3 illustrates a cross-section of an array of hollow fiber membranes 34. A plurality of hollow fiber membranes 34 extend from entry manifold 30c to exit manifold 30d. While FIG. 3 shows fourteen hollow fiber membranes 34 in the array, this number of hollow fiber membranes 34 is meant to merely illustrate the array. Fewer and greater numbers of hollow fiber membranes 34 are suitable. Typically, dozens or hundreds of hollow fiber membranes 34 make up a single array. Each hollow fiber membrane 34 is connected to both entry manifold 30c and exit manifold 30d. High temperature feed solution enters entry manifold 30c and travels through the inner bores of hollow fiber membranes 34 to exit manifold 30d. The inner bores are on a feed side of hollow fiber membranes 34. As the high temperature feed solution travels through the inner bores of hollow fiber membranes 34, some of the high temperature feed solution crosses hollow fiber membranes 34 as vapor distillate and enters distillation volume 28.

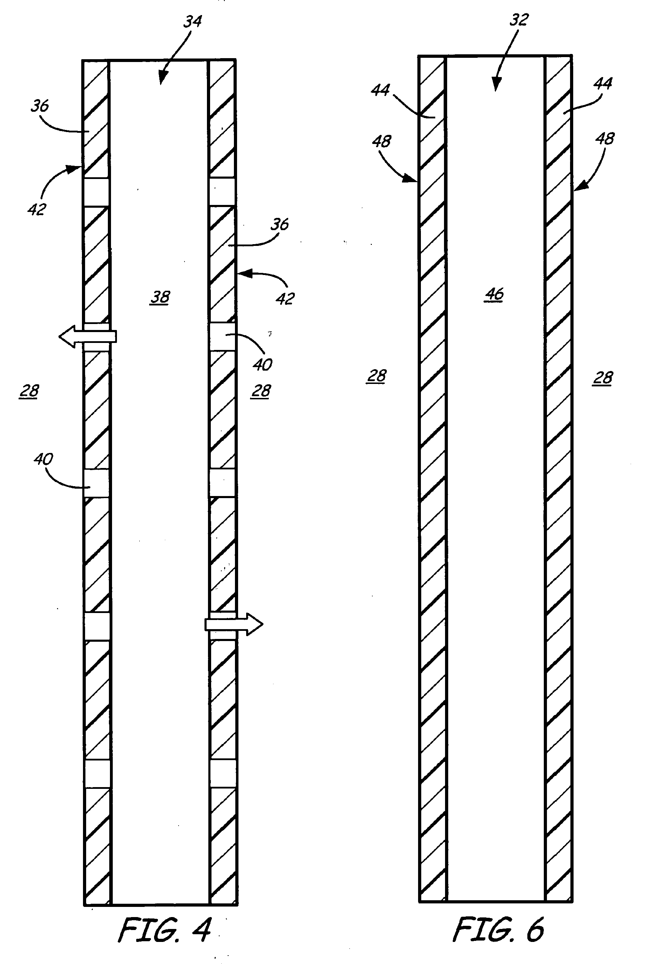

FIG. 4 illustrates an expanded cross-section of one hollow fiber membrane 34 which allows vapor transmission. Hollow fiber membranes 34 are formed from one or more hydrophobic, microporous materials that are capable of separating the distillate from the feed solution via vapor pressure differentials. Hollow fiber membrane 34 includes a porous membrane wall 36 and inner hollow region 38. Pores 40 within membrane wall 36 allow vapor to pass from the inner bore of hollow fiber membrane 34 across membrane wall 36 and into distillation volume 28 of distillation vessel 16. Pores 40 allow the transmission of gases and vapors, but restrict the flow of liquids and solids. Pores 40 allow evaporated distillate to separate from the feed solution via vapor pressure transport. Arrows illustrate vapor crossing membrane wall 36 through pores 40.

Examples of suitable materials for membrane wall 36 include hydrophobic polymeric materials, such as polypropylenes, polyethylenes, polytetrafluoroethylenes, polyvinylidene difluorides, Halar® ECTFE (ethylene chlorotrifluoroethylene, available from Solvay Solexis, Brussels, Belgium) and combinations thereof. Hydrophobic materials help prevent distillate in distillation volume 28 from crossing membrane wall 36 into inner hollow region 38 of hollow fiber membranes 34. Other suitable materials include non-hydrophobic polymer materials, such as polysulfones, polyethersulfones, and polyimides that are coated with hydrophobic material(s). Examples of particularly suitable materials for membrane wall 36 include thermally-resistant polymeric materials, such as polytetrafluoroethylenes, polyvinylidene difluorides, and combinations thereof. Examples of suitable wall thicknesses for membrane wall 36 range from about 50 micrometers to about 500 micrometers, with particularly suitable wall thicknesses ranging from about 100 micrometers to about 250 micrometers. Examples of suitable average pore sizes for membrane wall 36 range from about 0.01 micrometers to about 0.6 micrometers, with particularly suitable average pore sizes ranging from about 0.1 micrometers to about 0.4 micrometers.

Membrane distillation system 10 is configured to operate in liquid gap mode. In this configuration, vapor distillate crosses membrane wall 36 through pores 40 and condenses on an outer surface 42 of membrane wall 36. Outer surface 42 is located within distillation volume 28 of distillation vessel 16. Liquid (distillate) is present or flows through distillation volume 28. The liquid present or flowing through distillation volume 28 is generally cooler than the vapor passing across membrane wall 36. When the vapor encounters the liquid at outer surface 42, the vapor transfers thermal energy to the liquid and the vapor cools. As the vapor cools it condenses on outer surface 42 and joins with the liquid (distillate) in distillation volume 28.

FIG. 5 illustrates a cross-section of an array of hollow tubes 32. A plurality of hollow tubes 32 extends from entry manifold 30a to exit manifold 30b. While FIG. 5 shows fourteen hollow tubes 32 in the array, this number of hollow tubes 32 is meant to merely illustrate the array. Fewer and greater numbers of hollow tubes 32 are suitable. Typically, dozens or hundreds of hollow tubes 32 make up a single array. Each hollow tube 32 is connected to both entry manifold 30a and exit manifold 30b. Low temperature feed solution enters entry manifold 30a and travels through the inner bores of hollow tubes 32 to exit manifold 30b. The inner bores are on a feed side of hollow tubes 32. As the low temperature feed solution travels through the inner bores of hollow tubes 32, thermal energy from distillation volume 28 is transferred across the walls of hollow tubes 32 and to the low temperature feed solution, preheating the low temperature feed solution and recuperating thermal energy to increase the system energy efficiency.

FIG. 6 illustrates an expanded cross-section of one hollow tube 32 which prevents vapor transmission but allows transmission of thermal energy. As shown in FIG. 6, hollow tube 32 includes a non-porous and solid wall 44 and inner hollow region 46. Solid wall 44 is made up of a non-porous material that blocks the transmission of gases and vapors, thereby preventing mass (fluid) transfer across hollow tube 32. Suitable materials for hollow tubes 32 include polymeric materials that possess high thermal conductivity and are stable to heat and aqueous solutions. Examples of suitable materials include the suitable polymeric materials discussed above for membrane wall 36. Other suitable materials include polyethylene terephthalate and materials that can tolerate the thermal stress provided by the system and are resistant to corrosion in aqueous environments. Examples include metals, such as stainless steel and titanium. In exemplary embodiments, outer surface 48 of hollow tubes 32 (the distillate side) is hydrophilic. Hydrophilic outer surfaces 48 of hollow tubes 32 aid in the transfer of heat from the liquid distillate in distillation volume 28 through the walls of hollow tubes 32 to the feed solution flowing through hollow tubes 32. In exemplary embodiments, the thickness of solid wall 44 is minimized to improve heat transfer across solid wall 44 without compromising the structural and mechanical integrity of solid wall 44. Suitable thicknesses for solid wall 44 depends upon the material used for hollow tubes 32, the size and diameter of hollow tubes 32 and the temperature range of the distillate within distillation volume 28.

In one embodiment of membrane distillation system 10, arrays of hollow fiber membranes 34 and arrays of hollow tubes 32 are arranged in distillation volume 28 of distillation vessel 16. Thermal energy is recuperated within distillation vessel 16 as heat is transferred from the high temperature feed solution in hollow fiber membranes 34 to the distillate in distillation volume 28 to the low temperature feed solution in hollow tubes 32. In another embodiment of membrane distillation system 10, distillation volume 28 is packed with a heat exchange material to improve heat conductivity within distillation volume 28.

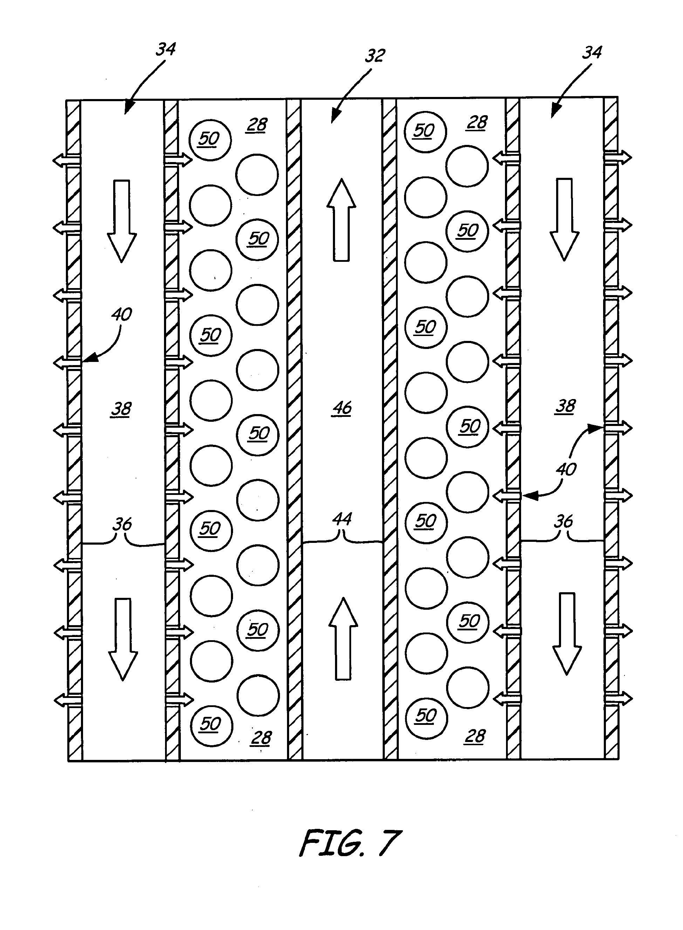

FIG. 7 illustrates a cross-sectional view of distillation vessel 16 with hollow fiber membranes 34, hollow tubes 32 and heat exchange material 50. Hollow fiber membranes 34 and hollow tubes 32 are arranged in an alternating fashion (i.e. alternating arrays of hollow fiber membranes 34 and hollow tubes 32). Solid arrows indicate the direction of feed solution flow through hollow fiber membranes 34 and hollow tubes 32. Hollow fiber membranes 34 and hollow tubes 32 are arranged in arrays. FIG. 7 shows a cross-section of two hollow fiber membranes 34 in separate arrays and one hollow tube 32 of an array. Located between each hollow fiber membrane 34 and each hollow tube 32 is heat exchange material 50. Heat exchange material 50 has a thermal conductivity greater than the thermal conductivity of the distillate (e.g., the thermal conductivity of water is about 0.6 W/m·°C in desalination applications). As a result of its higher thermal conductivity, heat exchange material 50 transfers heat more efficiently than the distillate within distillation volume 28.

In FIG. 7, heat exchange material 50 is represented by separate particles (circles) packed between hollow fiber membranes 34 and hollow tubes 32. While heat exchange material 50 can be spherical, it is not limited to this geometry. Heat exchange material 50 can also take the form of cubes, cuboids, polyhedrons and irregular shapes. The particulate nature of heat exchange material 50 allows distillate to flow between heat exchange materials 50 near one another to enhance the transfer of thermal energy. Particles of heat exchange material 50 typically range in size from about 25 microns to about 1000 microns. In exemplary embodiments, heat exchange material 50 ranges in size from about 50 microns to about 500 microns.

Heat exchange material 50 aids in the transfer of thermal energy within distillation volume 28 by virtue of its thermal conductivity (i.e. its ability to conduct heat). Heat exchange material 50 can contain metals, alloys, ceramics, zeolites, compounds and other matter having thermal conductivity greater than the thermal conductivity of the distillate. Table 1 indicates various heat exchange materials 50 and the approximate thermal conductivity values at 25 °C associated with those heat exchange materials 50. Each of these heat exchange materials 50 are suitable for use in distillation vessels 16 according to the present invention. The heat exchange materials 50 listed in Table 1 are by no means exclusive of other materials having a thermal conductivity greater than the thermal conductivity of the distillate (about 0.6 W/m·°C for water in desalination applications).

**Table 1.**

| Material | Thermal Conductivity (W/m·°C) |
|---|---|
| Silver | 429 |
| Copper | 401 |
| Gold | 310 |
| Aluminum | 250 |
| Molybdenum | 138 |
| Iron | 80 |
| Platinum | 70 |
| Aluminum oxide | 30 |
| Stainless steel | 16 |
| Sand (saturated) | 2-4 |
| Quartz (mineral) | 3 |
| Glass | 1.1 |
| Rock (solid) | 2-7 |

Due to the presence of the distillate within distillation volume 28, any heat exchange material 50 present within distillation vessel 16 should be both free of contaminants and inert with respect to the distillate. Distillate passing over and around heat exchange material 50 should not absorb contaminants in or on heat exchange material 50. Thus, heat exchange material 50 should be free of contaminants that could contaminate the distillate. Heat exchange material 50 is contacted with distillate throughout most, if not all, of the membrane distillation operation. Since the presence of distillate within distillation volume 28 is essentially continuous, heat exchange material 50 should be resistant to any chemical changes (e.g., oxidation) that may be initiated by the presence of warm distillate.

Heat exchange material 50 can be coated with another material to prevent reactions between heat exchange material 50 and the distillate. Typically, metallic particles (metals and alloys) are more likely to be coated than other heat exchange materials 50, but any matter suitable for coating can be coated. Suitable coatings for heat exchange material 50 include polypropylene, polytetrafluoroethylene, polystyrene, polyethylene terephthalate and hydrophilic plastic materials. Coatings for heat exchange material 50 should be stable in water at the operating temperatures of distillation vessel 16.

Heat recovery of membrane distillation system 10 can be expressed as gained output ratio (GOR). GOR is the ratio of the latent energy of the distillate to the energy spent to produce the distillate. The higher the GOR, the more efficient the membrane distillation system. Higher GORs lead to reduced operating costs. Systems utilizing cartridge-based membrane distillation units for direct contact membrane distillation can reach GORs around 3 but require expensive special equipment like titanium heat exchangers. Aside from the GOR limitation, cartridge type membrane distillation units have other disadvantages when compared to membrane distillation system 10 of the present invention. Cartridge-based membrane distillation units can be expensive to produce, having membranes and modules with high costs. Scaling up operations using cartridge units can be costly as changes to the overall assembly can be complex. Membrane distillation system 10 offers the potential to reach GORs of greater than 3 while also keeping system manufacturing, replacement and maintenance costs low and providing a design that allows for adaptation to large scale applications.

Modeling of membrane distillation system 10 indicates that a GOR of about 3.8 or greater can be reached. In one modeled embodiment, membrane distillation system 10 includes the components indicated in FIGS. 1 and 2. Feed solution is delivered by pump 14 through membrane distillation system 10 at a rate of about 70 liters per minute. Low temperature feed solution reaches hollow tubes 32 of distillation vessel 16 at a temperature of about 35 °C. As the low temperature feed solution travels through hollow tubes 32, the low temperature feed solution absorbs thermal energy to reach a temperature of about 82 °C by the time the preheated feed solution exits distillation vessel 16. From there, the preheated feed solution is directed to heat exchanger 18 where it is heated. High temperature feed solution returns to distillation vessel 16 and travels through hollow fiber membranes 34. The high temperature feed solution reaches hollow fiber membranes 34 at a temperature of about 90 °C. As the high temperature feed solution travels through hollow fiber membranes 34, the high temperature feed solution's thermal energy decreases as vapor transmits across the membranes. The retentate feed solution reaches a temperature of about 43 °C by the time the retentate feed solution exits distillation vessel 16. Due to the vapor pressure differential between the feed and distillate sides of hollow fiber membranes 34, vapor from the high temperature feed solution passes across the membrane and enters distillation volume 28. The temperature of the distillate in distillation volume 28 can range from about 85 °C (near where the high temperature feed solution enters hollow fiber membranes 34) to about 38 °C (near where the low temperature feed solution enters hollow tubes 32). Once it exits hollow fiber membranes 34, the retentate feed solution is cooled in heat exchanger 20 so that it can be returned to hollow tubes 32 at a temperature of about 35 °C. Additional feed solution can also be added to prevent solute levels within the feed solution from becoming too high. Distillation volume 28 is packed with aluminum oxide (Al₂O₃) to serve as heat exchange material 50. When packed, distillation volume 28 contains about 60% aluminum oxide and about 40% water (distillate). The combination of water and aluminum oxide provides an effective thermal conductivity of about 6.2 W/m·°C. Hollow tubes 32 have a wall thickness of about 150 microns. Solid wall 44 has a thermal conductivity of about 0.2 W/m-°C. Hollow fiber membranes 34 have a membrane surface area of about 73 m². The thermal efficiency of the membranes is about 66% with a flux of about 3.1 L/m²·hr. A membrane distillation system 10 with this configuration and these characteristics can produce about 4 liters of distillate per minute with a GOR of about 3.8.

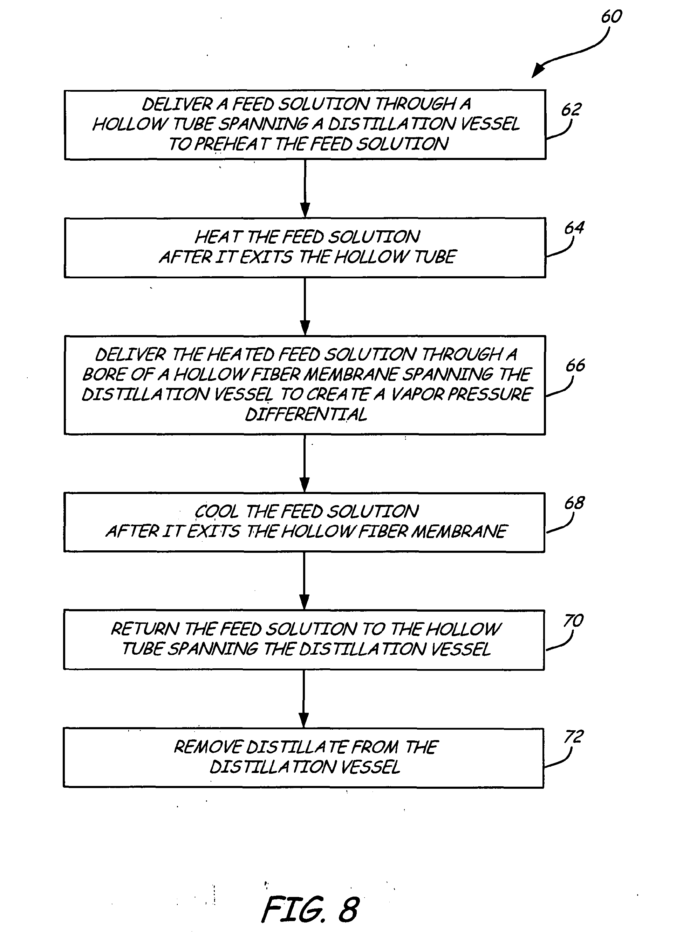

Membrane distillation system 10 provides for a method for producing distillate from a feed solution. FIG. 8 illustrates one such method 60. As described with reference to membrane distillation system 10 above, method 60 includes several steps. In step 62, low temperature feed solution is delivered through hollow tube 32 spanning distillation vessel 16. The low temperature feed solution is preheated as it flows through hollow tubes 32. Thermal energy from the high temperature feed solution flowing through hollow fiber membranes 34 is transferred to the low temperature feed solution flowing through hollow tubes 32 via the distillate (and heat exchange materials, when present). In step 64, the preheated feed solution is heated in heat exchanger 18 to generate high temperature feed solution. In step 66, the high temperature heated feed solution is delivered through a bore of hollow fiber membrane 34 spanning distillation vessel 16 to create a vapor pressure differential. The formed vapor pressure differential allows vapor to transmit across hollow fiber membrane 34. The high temperature feed solution that does not transmit across hollow fiber membrane 34 as vapor continues to flow through the bore of hollow fiber membrane 34 as retentate feed solution. In step 68, the retentate feed solution is cooled in heat exchanger 20. In step 70, feed solution (the retentate feed solution, fresh feed solution or a combination of the two) is returned and/or delivered to hollow tube 32. In step 72, distillate is removed from distillation vessel 16 at distillate outlet 27.

Embodiments of the present invention allow for membrane distillation with high thermal efficiency, simple designs and the ability to adapt to large scale operations. A distillation vessel having arrays of hollow fiber membranes and hollow tubes offers lower manufacturing, replacement and maintenance costs when compared to prior art membrane systems. Placing a heat exchange material between the hollow fiber membranes and hollow tubes of a distillation vessel also provides for increased thermal efficiency. The heat exchange material offers greater thermal conductivity than the distillate alone.

While the invention has been described with reference to exemplary embodiments, it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A membrane distillation system comprising:
a distillation vessel defining a distillation volume having a first portion and a second portion;
an array of hollow fiber membranes extending through the distillation volume from the first portion to the second portion, wherein the hollow fiber membranes are pervious to distillate vapor but impervious to feed solution;
an array of hollow tubes extending through the distillation volume from the second portion to the first portion and spaced from the array of hollow fiber membranes, wherein the hollow tubes are impervious to distillate vapor and feed solution and allow transmission of thermal energy to heat feed solution flowing through the hollow tubes using thermal energy from feed solution flowing through the hollow fiber membranes and carried by distillate within the distillation volume;
a pump for delivering feed solution to the array of hollow tubes;
a heating heat exchanger for heating feed solution after it exits the hollow tubes and before it enters the hollow fiber membranes;
a cooling heat exchanger for cooling feed solution after it exits the hollow fiber membranes and before it reenters the hollow tubes; and
an outlet for removing distillate from the distillation vessel.

2. The system of claim 1, further comprising:
a heat exchange material distributed within the distillation volume for transferring heat from feed solution flowing through the hollow fiber membranes to feed solution flowing through the hollow tubes.

3. The system of claim 2, wherein the heat exchange material has a particle size between about 25 microns and about 1000 microns; preferably wherein the heat exchange material has a particle size between about 50 microns and about 500 microns.

4. The system of claim 2 or 3, wherein the heat exchange material has a thermal conductivity greater than a thermal conductivity of the distillate.

5. The system of claim 2, 3 or 4, wherein the heat exchange material has a thermal conductivity greater than about 0.6 W/m·°C.

6. The system of claim 2, 3, 4 or 5, wherein the heat exchange material is selected from the group consisting of silver, copper, gold, aluminum, molybdenum, iron, platinum, aluminum oxide, stainless steel, sand, quartz, glass, rock, ceramics, zeolites and combinations thereof.

7. The system of claim 2, 3, 4, 5 or 6, wherein the heat exchange material is coated with a material selected from the group consisting of polypropylene, polytetrafluoroethylene, polystyrene, polyethylene terephthalate, hydrophilic plastics and combinations thereof.

8. The system of any preceding claim, wherein the hollow fiber membranes comprise a microporous membrane wall formed from at least one polymeric material selected from the group consisting of polypropylene, polyethylene, polysulfone, polyethersulfone, polyimide, polytetrafluoroethylene, polyvinylidene difluoride, ethylene chlorotrifluoroethylene and combinations thereof.

9. The system of any preceding claim, wherein the hollow fiber membranes have an average micropore size ranging from about 0.01 micrometers to about 0.6 micrometers.

10. The system of any preceding claim, wherein the hollow tubes comprise a non-porous wall formed from a material selected from the group consisting of polypropylene, polyvinylidene difluoride, polytetrafluoroethylene, polystyrene, high density polyethylene and combinations thereof.

11. The system of any preceding claim, wherein the system provides a gained output ratio of at least about 3.8.

12. The system of any preceding claim, wherein the distillation vessel comprises a recirculation loop for recirculating distillate within the distillation volume.

13. A circuitous membrane distillation system comprising a membrane distillation system as claimed in any preceding claim and:
a feed solution source for providing a feed solution;
the pump for delivering the feed solution to a distillation vessel;
the distillation vessel comprising:
vessel walls defining a distillation volume;
a first manifold for receiving the feed solution delivered by the pump and located in a first portion of the distillation vessel;
a second manifold located in a second portion of the distillation vessel;
a plurality of hollow tubes extending from the first manifold to the second manifold, wherein the hollow tubes are impervious to distillate vapor and feed solution but allow transmission of thermal energy;
a third manifold for receiving heated feed solution and located in the second portion of the distillation vessel and spaced from the second manifold;
a fourth manifold located in the first portion of the distillation vessel and spaced from the first manifold; and
a plurality of hollow fiber membranes extending from the third manifold to the fourth manifold, wherein the hollow fiber membranes are pervious to distillate vapor but impervious to feed solution, allowing distillate vapor to cross the membrane into the distillation volume;
the heating heat exchanger for heating the feed solution after exiting the second manifold and before entering the third manifold; and
the cooling heat exchanger for cooling the feed solution after exiting the fourth manifold and before returning to the feed solution source.

14. A method for removing distillate from a feed solution, the method comprising:
delivering a feed solution through hollow tubes spanning a distillation vessel to preheat the feed solution as it flows through the hollow tubes;
heating the feed solution after it exits the hollow tubes;
delivering the feed solution through bores of hollow fiber membranes spanning the distillation vessel to create a vapor pressure differential between the bores of the hollow fiber membranes and a distillation volume within the distillation vessel, wherein the vapor pressure differential causes vapor from the feed solution to transmit across the hollow fiber membranes and condense as distillate within the distillation vessel, and wherein thermal energy from the feed solution flowing through the bores of the hollow fiber membranes is transferred to the feed solution flowing through the hollow tubes;
cooling the feed solution after it exits the bores of the hollow fiber membranes;
returning the cooled feed solution to the hollow tubes; and
removing distillate from the distillation volume of the distillation vessel.

15. The method of claim 14, further comprising:
providing a heat exchange material within the distillation volume to transfer heat from the feed solution flowing through the bores of the hollow fiber membranes to the feed solution flowing through the hollow tubes; preferably wherein the provided heat exchange material has a thermal conductivity greater than a thermal conductivity of the distillate; and/or wherein the provided heat exchange material has a thermal conductivity greater than about 0.6 W/m·°C.
